# EUROPEAN PATENT APPLICATION

(11) **EP 4 345 963 A1**
(43) Date of publication of application: **03.04.2024**
(21) Application number: 23194287.1
(22) Date of filing: 30.08.2023
(51) Int. Cl.: H01M 10/04, H01M 10/0587, H01M 50/107, H01M 50/528, H01M 50/533, H01M 50/536, H01M 50/538

(54) **CYLINDRICAL SECONDARY BATTERY AND MANUFACTURING METHOD OF SECONDARY BATTERY**

(30) Priority: 30.08.2022 KR 20220109094
(71) Applicant: Samsung SDI Co., Ltd., Yongin-si, Gyeonggi-do 17084 (KR)
(72) Inventor: KIM, Jung Hyun, 17084 Yongin-si (KR); KIM, Joung Ku, 17084 Yongin-si (KR); PARK, Byung Kyu, 17084 Yongin-si (KR); PARK, Jung Hyun, 17084 Yongin-si (KR); SHIN, Joo Youn, 17084 Yongin-si (KR); LEE, Gye Won, 17084 Yongin-si (KR); LEE, Dong Sub, 17084 Yongin-si (KR); JUNG, Hyun Ki, 17084 Yongin-si (KR)
(74) Representative: Marks & Clerk LLP

(57) **Abstract**

A cylindrical secondary battery and a manufacturing method of a secondary battery are provided. A manufacturing method of a cylindrical secondary battery includes: winding an electrode assembly to expose a first electrode uncoated portion and a second electrode uncoated portion to opposite ends in a longitudinal direction; bending at least some portions of the first electrode uncoated portion and the second electrode uncoated portion of the electrode assembly in a direction by pressing the first electrode uncoated portion and the second electrode uncoated portion; welding electrode collector plates to ends of the bent first and second electrode uncoated portions; and inserting and sealing the electrode assembly into a cylindrical case.

## Description

### BACKGROUND

### 1. Field

Aspects of embodiments of the present disclosure relate to a cylindrical secondary battery and a manufacturing method of a secondary battery.

### 2. Description of the Related Art

In general, a cylindrical secondary battery includes a cylindrical electrode assembly, a cylindrical can, or case, accommodating the electrode assembly and an electrolyte, and a cap assembly coupled to an upper opening of the can to seal the can and to allow current generated from the electrode assembly to flow to an external device.

Secondary batteries generally have various internal resistance elements, such as substrate resistance or component resistance of an electrode assembly. In order to reduce such resistance elements, various research and development, such as adding a tab or changing the material of a cap assembly, are being conducted.

In particular, in the case of a cylindrical secondary battery, as the capacity increases, the amount of weldable substrates (uncoated portions) may decrease, and, as the distance between substrates increases, the heat capacity of the welded portion may decrease. In addition, during welding after the substrate is compacted, an empty space may be generated and welding heat may penetrate, such that an electrode plate or a separator may be melted due to the welding heat after welding a current collector plate, which may be problematic. Therefore, it is desirable to propose a method for solving these problems.

The above information disclosed in this Background section is provided for enhancement of understanding of the background of the invention and, therefore, it may contain information that does not constitute prior art.

### SUMMARY

According to aspects of embodiments of the present disclosure, a cylindrical secondary battery capable of reducing electrode plate resistance and having an improved current collecting structure and a manufacturing method of a secondary battery are provided. According to another aspect of embodiments of the present disclosure, during welding of current collector plates, substrates can be uniformly and regularly overlapped, thereby increasing an overlapping amount. Accordingly, a strength of current collector welding may be increased and welding dispersion may be reduced, and, thus, a current collecting structure may be improved.

According to one or more embodiments of the present disclosure, a manufacturing method of a secondary battery includes: winding an electrode assembly to expose a first electrode uncoated portion and a second electrode uncoated portion to both, or opposite, ends in a longitudinal direction; bending at least some portions of the first electrode uncoated portion and the second electrode uncoated portion of the electrode assembly in a direction by pressing the first electrode uncoated portion and the second electrode uncoated portion; welding electrode collector plates to ends of the bent first and second electrode uncoated portions; and inserting and sealing the electrode assembly into a cylindrical case, or can.

The first electrode uncoated portion and the second electrode uncoated portion may be bent by a plurality of jigs.

The first electrode uncoated portion and the second electrode uncoated portion may be pressed in a winding axis direction of the electrode assembly by the plurality of jigs and may then be bent.

According to one or more embodiments of the present disclosure, a cylindrical secondary battery manufactured by a manufacturing method of the present disclosure is provided.

At least some of the above and other features of the invention are set out in the claims.

### BRIEF DESCRIPTION OF DRAWINGS

FIG. 1 is a perspective view illustrating a cylindrical secondary battery according to an embodiment.
FIG. 2 is a perspective view illustrating an electrode assembly and a current collecting structure of the cylindrical secondary battery according to FIG. 1.
FIG. 3 is a plan view illustrating a state before winding of the electrode assembly according to FIG. 2.
FIG. 4 is a schematic diagram illustrating equipment for a substrate pre-compaction process according to an embodiment of the present disclosure.
FIG. 5 is a schematic diagram illustrating a state of the pre-compaction process according to FIG. 4.
FIG. 6 is a diagram for comparison of substrate states without and with the pre-compaction according to FIG. 5 applied.

### DETAILED DESCRIPTION

Some embodiments of the present disclosure are described to more completely explain the present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) referring to the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, some embodiments of a cylindrical secondary battery and a manufacturing method of a secondary battery will be described in further detail with reference to the accompanying drawings.

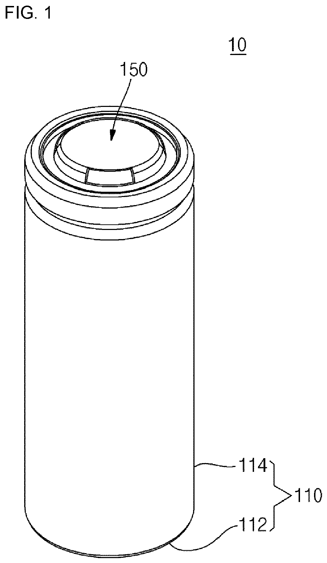

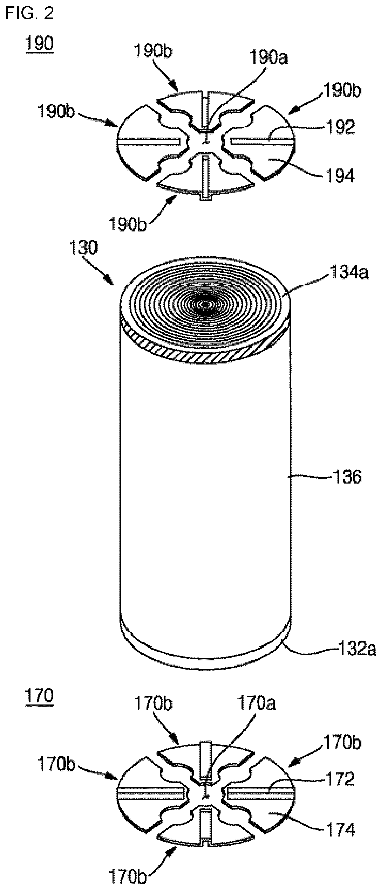

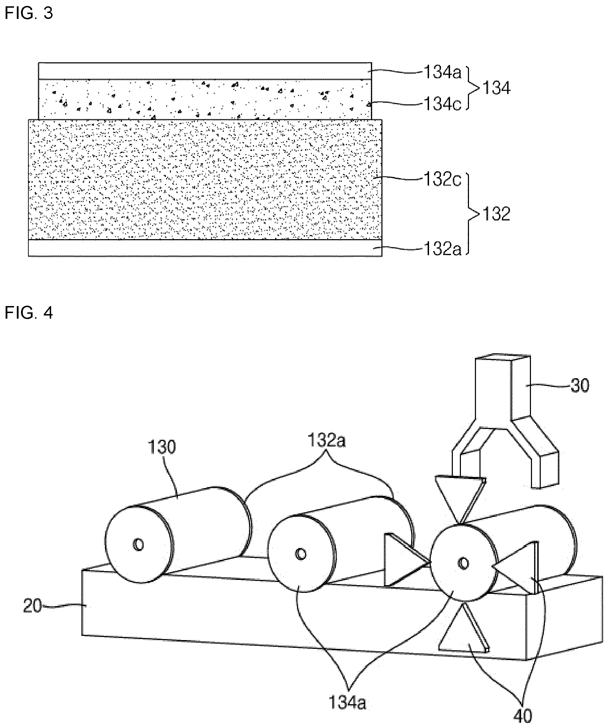

FIG. 1 is a perspective view illustrating a cylindrical secondary battery according to an embodiment; FIG. 2 is a perspective view illustrating an electrode assembly and a current collecting structure of the cylindrical secondary battery according to FIG. 1; and FIG. 3 is a plan view illustrating a state before winding of the electrode assembly according to FIG. 2.

As shown in FIGS. 1 and 2, a cylindrical secondary battery 10 according to an embodiment may include a cylindrical can, or case, 110, an electrode assembly 130 inserted into the can 110, a cap assembly 150 coupled to an end of the can 110, and a first electrode current collector 170 and a second electrode current collector 190 which electrically connects the electrode assembly 130 to the cap assembly 150.

The can 110 includes a circular bottom portion 112 and a side portion 114 extending upward from the bottom portion 112, and has a cylindrical shape (herein referred to as an opening) with an upper end of the side portion 114 open. In a manufacturing process of the secondary battery 10, the electrode assembly 130 is inserted into the can 110 together with an electrolyte through the opening of the can 110. The electrode assembly 130 is electrically connected to the can 110 and the cap assembly 150 by the first electrode current collector 170 and the second electrode current collector 190. The can 110 may be made of steel, a steel alloy, nickel-plated steel, a nickel-plated steel alloy, aluminium, an aluminium alloy, or an equivalent thereof, but the material is not limited thereto. In a state in which the electrode assembly 130 is accommodated inside the can 110, the cap assembly 150 is inserted into the opening to close the opening.

As shown in FIGS. 2 and 3, the electrode assembly 130 includes a first electrode plate 132, a second electrode plate 134, and a separator 136.

In an embodiment, the first electrode plate 132 may be an anode plate in which an anode active material layer 132c (e.g., graphite, carbon, etc.) is formed on both sides of a copper (Cu) or nickel (Ni) foil, or substrate. A first electrode uncoated portion 132a on which the anode active material layer 132c is not coated may be formed on a portion of the first electrode plate 132.

In an embodiment, the second electrode plate 134 may be a cathode plate in which a cathode active material layer 134c (e.g., a transition metal oxide (LiCoO₂, LiNiO₂, LiMn₂O₄, etc.) are formed on both sides of an aluminium (Al) foil, or substrate. A second electrode uncoated portion 134a on which the cathode active material layer 134c is not coated may be formed on a portion of the second electrode plate 134.

The first electrode plate 132 and the second electrode plate 134 are referred to as electrode plates. In addition, the first electrode uncoated portion 132a and the second electrode uncoated portion 134a are also referred to as substrates.

The separator 136 may be interposed between the first electrode plate 132 and the second electrode plate 134 to prevent or substantially prevent a short circuit and allow (e.g., only allow) the movement of lithium ions. The separator 136 may be polyethylene (PE) or polypropylene (PP), but is not limited thereto.

As shown in FIG. 2, in an embodiment, the first electrode plate 132, the second electrode plate 134, and the separator 136 may be wound in a substantially cylindrical shape and may be accommodated in the can 110. The first electrode plate 132 and the second electrode plate 134 may be disposed such that the first electrode uncoated portion 132a and the second electrode uncoated portion 134a to which no active material is applied are located in opposite directions for winding.

For example, the first electrode plate 132 that is an anode plate may be disposed such that the first electrode uncoated portion 132a faces downward with reference to FIG. 2. The second electrode plate 134 that is a cathode plate may be disposed facing upward with reference to FIG. 2. Winding may be performed in a state in which the separator 136 is disposed between the first electrode plate 132 and the second electrode plate 134 to insulate the first electrode plate 132 and the second electrode plate 134 from each other. In the present disclosure, before inserting the electrode assembly 130 into the can 110, a so-called "pre-compaction" process in which the first electrode uncoated portion 132a and the second electrode uncoated portion 134a are compacted in the winding axis direction may be performed (which will be discussed later). After pre-compacting the first electrode uncoated portion 132a and the second electrode uncoated portion 134a, the first electrode current collector 170 and the second electrode current collector 190, which will be described later, may be respectively connected to the first electrode uncoated portion 132a and the second electrode uncoated portion 134a. Accordingly, the can 110 and the cap assembly 150 are electrically connected to the electrode assembly 130.

As shown in FIG. 2, the current collector plates may include a first electrode current collector plate 170 electrically connecting the first electrode plate 132 to the bottom surface of the can 110 and a second electrode current collector plate 190 electrically connecting the second electrode plate 134 to the cap assembly 150. Accordingly, the first electrode current collector plate 170 may be referred to as an anode current collector plate, and the second electrode current collector plate 190 may be referred to as a cathode current collector plate.

In an embodiment, the first electrode current collector plate 170 has a plurality of plate materials having an approximate fan shape, and, when the divided pieces are collected, may have a substantially disk shape. For example, in an embodiment of the present disclosure, each piece of the first electrode current collector plate 170 may have a fan shape obtained by dividing a circular plate into four pieces. For convenience of description, each piece of the first electrode current collector plate 170 is defined as a current collecting member 170b. In a case in which the cylindrical secondary battery 10 is formed to have a center pin, a hollow 170a (through holes other than the hollow being for injection of an electrolyte) may be formed in the center of the first electrode current collector plate 170 when the current collecting members 170b are gathered to form the first electrode current collector plate 170. The first electrode current collector plate 170 electrically connects the first electrode plate 132 to the bottom portion 112 of the can 110. In an embodiment, a plurality of substrate current collectors 172 and a can connection part 174 may be formed in each of the current collecting members 170b. The first electrode current collector plate 170 may be electrically connected to the first electrode uncoated portion 132a and the can 110.

In an embodiment, as shown in FIG. 2, the second electrode current collector plate 190 is symmetrically installed to face the first electrode current collector plate 170 with the electrode assembly 130 interposed therebetween.

In an embodiment, the second electrode current collector plate 190 has a plurality of plate materials having an approximate fan shape, and, when the divided pieces are collected, may have a substantially disk shape. For example, in an embodiment of the present disclosure, each piece of the second electrode current collector plate 190 may have a fan shape obtained by dividing a circular plate into four pieces. For convenience of description, each piece of the second electrode current collector plate 190 is defined as a current collecting member 190b. In a case in which the cylindrical secondary battery 10 is formed to have a center pin, a hollow 190a (through holes other than the hollow being for injection of an electrolyte) may be formed in the center of the second electrode current collector plate 190 when the current collecting members 190b are gathered to form the second electrode current collector plate 190. The second electrode current collector plate 190 electrically connects the second electrode plate 134 to the cap assembly 150. In an embodiment, a plurality of substrate current collectors 192 and a cap connection part 194 may be formed in each of the current collecting members 190b. The second electrode current collector plate 190 may be electrically connected to the second electrode uncoated portion 134a and the cap assembly 150.

The cylindrical secondary battery having the aforementioned construction is subjected to a substrate pre-compaction process before winding the electrode assembly.

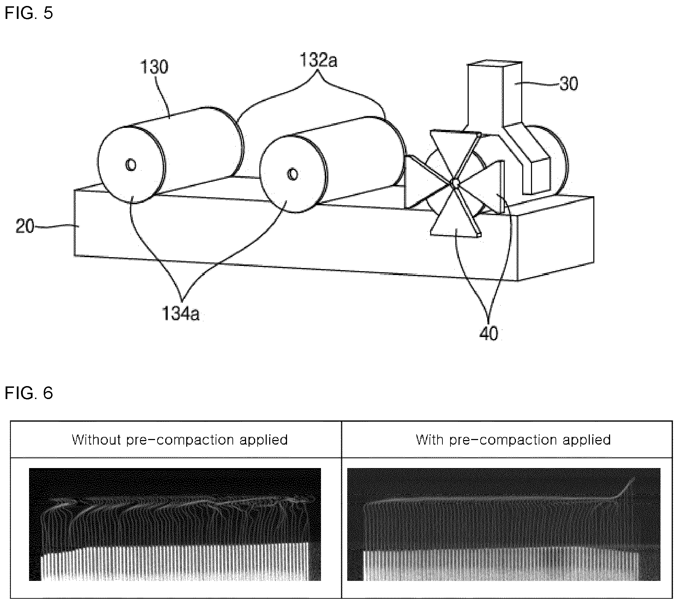

FIG. 4 is a schematic diagram illustrating equipment for a substrate pre-compaction process according to an embodiment of the present disclosure; FIG. 5 is a schematic diagram illustrating a state of the pre-compaction process according to FIG. 4; and FIG. 6 is a diagram for comparison of substrate states without and with the pre-compaction according to FIG. 5 applied.

As shown in FIG. 4, a conveyor mechanism 20 for transporting the electrode assemblies 130 at regular intervals for a pre-compaction process before substrate welding, a fixing mechanism 30 for temporarily fixing the electrode assembly 130 on the conveyor mechanism 20, and a plurality of jigs 40 for pushing the substrate of the fixed electrode assembly 130 in a direction, may be provided.

As an example, the jigs 40 may include four jigs. In an embodiment, after arranging the four jigs 40 in a circular pattern to have equal intervals, as shown in FIG. 5, when the electrode assembly 130 moves from the outer circumference to the winding axis, the substrate (which is a term encompassing the first electrode uncoated portion 132a or the second electrode uncoated portion 134a) is pressed. Accordingly, the pressed substrate is bent at an angle (e.g., a predetermined angle) toward the direction of the winding axis. When the bending of the substrate is completed, the electrode assembly 130 is separated from the fixing mechanism 30, and then the above-described current collector plate is welded to the bent portion of the substrate. Although only the process in which the second electrode uncoated portion 134a is pre-compacted is shown in the figure, the first electrode uncoated portion 132a may also be compacted by applying a pre-compaction process concurrently (e.g., simultaneously) with the second electrode uncoated portion 134a or sequentially after pre-compaction of the second electrode uncoated portion 134a.

In an embodiment, the operation of the jigs 40 may be performed by a separate driver that is not shown in the drawings. As an example, the driver may be configured by applying a linear motor or an actuator capable of rectilinearly reciprocating the jigs 40 in the winding axis direction and the outer circumferential direction of the electrode assembly 130.

When the substrate is bent, as shown in FIG. 6, the substrate overlapping amount may increase, compared to a substrate to which the pre-compaction process is not applied. That is, when the pre-compaction process is not applied, ends of a substrate may be irregularly pressed and bent, such that heights of the ends or the substrate end overlapping amount become irregular. However, when the pre-compaction process is applied, the substrates are bent in a same direction, the substrate ends overlap regularly, and, thus, the substrate-end overlapping amount may be increased, compared to when the pre-compaction process is not applied. In addition, since the substrates are bent regularly, the heights of the substrate ends are uniformly aligned, and the amount of substrate welded when welding the current collector plate may increase, and, thus, the tensile strength is improved. Accordingly, there is an effect of improving resistance distribution and improving welding quality by uniformly, or substantially uniformly, aligning the substrate.

As described above, according to embodiments of the present disclosure, substrates are pre-compacted by using dedicated jigs for compacting the substrates, and during welding of current collector plates, substrates can be uniformly or substantially uniformly and regularly overlapped, thereby increasing the overlapping amount. Accordingly, the strength of current collector welding can be increased and welding dispersion can be reduced, and, thus, a current collecting structure may be improved.

While some embodiments have been described herein, it will be understood by a person skilled in the art that various changes in form and details may be made therein without departing from the scope of the present disclosure as set forth in the following claims.

## Claims

1. A manufacturing method of a secondary battery, the manufacturing method comprising:
winding an electrode assembly to expose a first electrode uncoated portion and a second electrode uncoated portion to opposite ends in a longitudinal direction;
bending at least some portions of the first electrode uncoated portion and the second electrode uncoated portion of the electrode assembly in a direction by pressing the first electrode uncoated portion and the second electrode uncoated portion;
welding electrode collector plates to ends of the bent first and second electrode uncoated portions; and
inserting and sealing the electrode assembly into a cylindrical case.

2. A cylindrical secondary battery manufactured by the manufacturing method as claimed in claim 1.

3. The manufacturing method as claimed in claim 1, wherein the first electrode uncoated portion and the second electrode uncoated portion are bent by a plurality of jigs.

4. A cylindrical secondary battery manufactured by the manufacturing method as claimed in claim 3.

5. The manufacturing method as claimed in claim 3, wherein the first electrode uncoated portion and the second electrode uncoated portion are pressed in a winding axis direction of the electrode assembly by the plurality of jigs and are then bent.

6. A cylindrical secondary battery manufactured by the manufacturing method as claimed in claim 5.
